# FASCICULE DE BREVET EUROPEEN

(11) **EP 0 532 605 B1**
(45) Date de publication et mention de la délivrance du brevet: **04.05.1994**
(21) Numéro de dépôt: 91910913.2
(22) Date de dépôt: 03.06.1991
(51) Int. Cl.: B21J 15/32

(54) **DISPOSITIF DE SELECTION ET DISTRIBUTION DE PIECES TELLES QUE RIVETS**
VORRICHTUNG ZUR AUSWAHL UND VERTEILUNG VON TEILEN WIE NIETEN
DEVICE FOR THE SELECTION AND DISTRIBUTION OF PARTS SUCH AS RIVETS

(30) Priorité: 05.06.1990 FR 9007305
(43) Date de publication de la demande: 24.03.1993
(73) Titulaire: STE ATELIERS DE LA HAUTE-GARONNE - ETS AURIOL ET CIE, F-31130 Balma (FR); Auriol, Jean-Marc, F-31130 Balma (FR); Bornes, Philippe, F-31130 Balma (FR)
(72) Inventeur: AURIOL, Jean-Marc, F-31130 Balma (FR); BORNES, Philippe, F-31130 Balma (FR)
(74) Mandataire: Barre, Philippe
(86) Numéro de dépôt international: FR9100441
(87) Numéro de publication internationale: WO9118695

(56) Documents cités:
- DE-A- 3 301 243
- FR-A- 2 625 696
- US-A- 4 208 153

## Description

L'invention concerne un dispositif de sélection et distribution individuelle de pièces telles par exemple que des rivets.

La présente invention se propose d'alimenter une machine ou un outil en pièces de différents types, avec sélection unitaire du type de pièce à chaque séquence de distribution.

L'invention s'applique en particulier pour alimenter une machine automatique à riveter, en rivets d'un diamètre approprié à l'outil de rivetage de la machine et de longueurs variées adaptées à l'assemblage à réaliser.

Un premier système d'alimentation connu comprend des lames qui distribuent les rivets vers des rails en fonction de leur type ; l'ensemble des rails est mobile et un dispositif d'entraînement déplace cet ensemble à chaque séquence pour positionner le rail portant les rivets sélectionnés devant un conduit de transfert vers la machine à riveter. Un autre type de système connu est constitué par deux dispositifs de transfert à vérins, qui sont disposés en cascade à la sortie de bols vibrants ; le premier dispositif réalise, dans chaque type de rivets, le prélèvement des rivets un par un et l'autre assure, à chaque séquence, la sélection du rivet du type approprié. Toutefois, ces systèmes sont lourds, d'inertie élevée et peu fiables, en raison notamment de la présence des bols vibrants et des moyens associés (rampes, moyens de mise en vibration, conteneurs, châssis de soutien...). Le brevet US-A- 4.208.153 décrit un système amélioré mais celui-ci comprend également des bols vibrants.

Un autre type de dispositif, correspondant au préambule de la revendication 1, est décrit dans le brevet DE-A- 3.301.243. Dans ce dispositif, plusieurs conduits d'arrivée sont connectés à une tête de distribution qui les met, tour à tour, en communication avec une sortie. La communication est assurée par un passage qui met en liaison directe un conduit d'arrivée et le conduit de sortie afin d'assurer une continuité entre les deux. Toutefois, un tel dispositif ne garantit pas une distribution pièce par pièce, puisque, lorsqu'un conduit d'arrivée est mis en liaison avec le conduit de sortie, toutes les pièces du conduit d'arrivée peuvent passer dans le passage qui assure la communication. Le caractère individuel de la distribution est assuré par un transfert pneumatique individuel des pièces dans chaque conduit d'arrivée, le dispositif jouant simplement le rôle d'aiguillage. De plus, dans ce type de dispositif, le passage mobile entre chaque conduit d'arrivée et le conduit de sortie est oblique par rapport à ces derniers et il existe des risques de coincement des pièces.

L'invention vise à fournir un dispositif de sélection et distribution de rivets, et plus généralement de pièces quelconques, qui présente une structure simple, une faible inertie et une grande fiabilité, et qui garantisse une distribution individuelle des pièces sélectionnées.

A cet effet, le dispositif visé par l'invention comprend :
(a) au moins deux conduits d'arrivée de pièces, chaque conduit relié à une source de fluide comprimé étant constitué par un tube présentant une âme creuse de forme adaptée pour assurer un guidage de pièces d'un type déterminé, et se terminant par une extrémité de distribution desdites pièces,
(b) une tête de transfert séquentiel à laquelle sont connectées les extrémités de distribution des conduits d'arrivée en vue du transfert des pièces provenant de ceux-ci, ladite tête de transfert comprenant :

. des platines fixes entre lesquelles sont disposés des tiroirs mobiles, chaque tiroir étant associé à un conduit et doté d'un logement agencé pour recevoir les pièces sortant dudit conduit,
. des moyens communs de sortie des pièces, associés à des moyens d'expulsion en particulier pneumatiques,
. des moyens d'entraînement de chaque tiroir, adaptés pour mouvoir, sur commande, le tiroir considéré.

Selon la présente invention, ce dispositif se caractérise en ce que :
- chaque conduit d'arrivée comprend au moins une rainure longitudinale ménagée sur sa surface interne de façon à s'ouvrir dans son âme creuse sur la longueur de celle-ci, de sorte que la pression du fluide comprimé s'exerce tout le long de l'âme creuse dudit conduit, dans les espaces séparant les pièces, jusqu'à la dernière pièce située au niveau de l'extrémité de distribution,
- chaque tiroir est mobile entre deux positions, l'une dite position de réception dans laquelle son logement communique avec le conduit d'arrivée correspondant pour recevoir une pièce, ledit logement étant alors isolé des moyens communs de sortie de façon que la pièce demeure prisonnière à l'intérieur dudit logement, l'autre dite position d'expulsion dans laquelle ledit logement communique avec les moyens communs de sortie en vue d'assurer l'expulsion de la pièce contenue dans celui-ci, le logement étant alors isolé du conduit d'arrivée correspondant,
- des moyens de retenue sont associés à chaque conduit d'arrivée et au logement correspondant du tiroir en vue de retenir la pièce engagée dans ledit logement lorsque celui-ci est en position de réception,
- les moyens d'entraînement sont adaptés pour mouvoir chaque tiroir entre la position d'expulsion et la position de réception en vue d'assurer un transfert individuel des pièces.

Ainsi les pièces de types différents qui sont à sélectionner et distribuer à l'unité sont stockées dans des tubes qui peuvent contenir chacun un nombre très élevé de pièces d'un type déterminé : la pression du fluide distribué tout le long de chaque tube permet de faire circuler ces pièces sans risque de coincement et de les présenter, une à une, à l'extrémité de distribution du tube. A la sortie de ces tubes, les pièces sont présentées devant un nombre de tiroirs égal au nombre de tubes et donc de catégories de pièces, et s'engagent dans le logement desdits tiroirs ; pour sélectionner la pièce désirée, il suffit de mouvoir le tiroir approprié afin d'amener le logement de celui-ci au niveau des moyens communs de sortie de la tête de transfert : par l'action des moyens pneumatiques, cette pièce est expulsée de son logement et distribuée vers la machine ou l'outil qu'elle doit alimenter.

Un tel dispositif bénéficie d'une grande simplicité structurelle et d'une faible inertie permettant des cadences de distribution élevées, car les éléments en mouvement (tiroirs) sont légers et de faible encombrement. A chaque séquence de distribution, le dispositif de l'invention garantit que la pièce distribuée est du type désiré grâce à un conditionnement préalable rigoureux des différents types de pièces dans des tubes différents, évitant tout risque de mélange de ces pièces ; cette condition réduit considérablement les risques de pannes de la machine située en aval.

Selon un mode de réalisation préféré, les platines fixes de la tête de transfert présentent des parties décalées les unes par rapport aux autres de façon à connecter sur chacune d'elles l'extrémité de distribution d'un conduit d'arrivée. Les moyens communs de sortie des pièces peuvent très simplement comprendre des passages ménagés dans les platines et les tiroirs, ces passages étant positionnés de façon à venir dans l'alignement lorsque les tiroirs sont dans leur position de réception ; ces passages ont une section adaptée pour permettre le passage des pièces à distribuer d'un côté de la tête, ils débouchent dans un conduit d'expulsion des pièces.

Par ailleurs, dans un premier mode de réalisation, les moyens de retenue comprennent avantageusement des organes de butée agencés en regard de l'extrémité de distribution de chaque conduit de façon à bloquer la pièce engagée dans le logement du tiroir correspondant lorsque celui-ci est dans sa position de réception, chaque organe de butée étant agencé à l'opposé des moyens communs de sortie en vue de libérer la pièce lors du début du mouvement du tiroir vers la position d'expulsion. Dans le cas d'un rivet à tête, celui-ci peut être bloqué par appui de l'organe de butée au-dessous de la tête ; dans le cas de pièces sans tête, l'organe de butée peut être escamotable et bloquer la pièce en bout de tige.

Dans un autre mode de réalisation, les moyens de retenue comprennent des moyens d'arrêt disposés dans le logement de chaque tiroir de façon à arrêter la pièce après son insertion dans ledit logement ; ces moyens d'arrêt peuvent être constitués par un épaulement ou un chanfrein, disposé dans le logement pour arrêter la pièce par appui contre son extrémité ou contre sa tête ; les passages des moyens communs de sortie sont alors agencés pour déboucher, d'un côté de la tête, dans un conduit de stockage provisoire de chaque pièce et, de l'autre côté de la tête, dans un conduit d'expulsion des pièces ; en outre, les moyens pneumatiques d'expulsion sont adaptés pour assurer, dans une première phase, une expulsion de la pièce vers le conduit de stockage provisoire, puis dans une seconde phase, après retour du tiroir dans la position de réception, un entrainement de la pièce depuis ledit conduit de stockage provisoire vers le conduit d'expulsion.

L'invention est applicable pour sélectionner et distribuer des pièces de -n- types différents, n pouvant être quelconque. Il suffit de prévoir -n- conduits d'arrivée connectés à la tête de transfert, par lesquels arrivent les différents types de pièces, et -n- tiroirs mobiles, chacun affecté à un conduit.

D'autres caractéristiques, buts et avantages de l'invention ressortiront de la description qui suit en référence aux dessins annexés, lesquels présentent un exemple de dispositif destiné à sélectionner et distribuer des rivets pour alimenter une machine à riveter, ainsi qu'une variante dudit dispositif ; sur ces dessins qui font partie intégrante de la présente description :
- la figure 1 est une coupe schématique du dispositif visé,
- la figure 2 est une coupe transversale par un plan AA d'un tube de ce dispositif,
- la figure 3 est une coupe de détail de ce dispositif,
- les figures 4 et 5 sont des coupes illustrant le fonctionnement du dispositif,
- les figures 6, 7 et 8 visent une variante du dispositif.

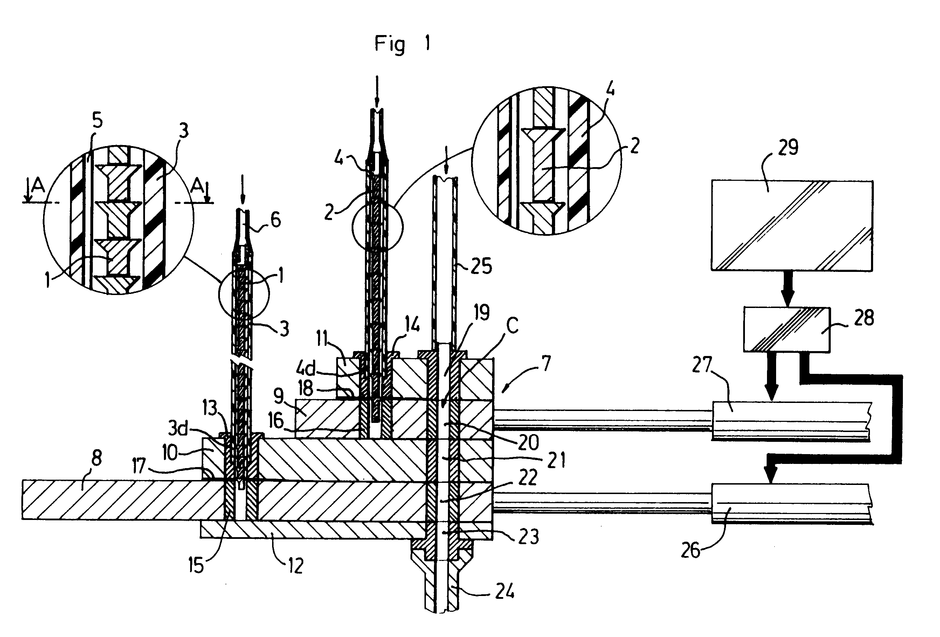

Le dispositif représenté à titre d'exemple aux figures 1 à 5 est destiné à assurer la sélection et la distribution de deux types de rivets 1 et 2 présentant une symétrie de révolution autour d'un axe et une tête de diamètre élargi ; ces rivets ont des diamètre de tige et diamètre de tête identiques mais les rivets 1 ont des tiges plus courtes que les rivets 2 dans le but par exemple d'assembler des matériaux d'épaisseurs différentes.

Le dispositif comprend deux tubes : un tube 3 dans lequel les rivets courts sont conditionnés et un tube 4 dans lequel les rivets longs sont conditionnés.

Chaque tube 3 ou 4 est de forme cylindrique et possède une âme creuse axiale de forme cylindrique, dont le diamètre est adapté à celui de la plus grande section des rivets à distribuer (tête de rivet) de façon à contenir ceux-ci et à les guider sur leur périphérie avec un-jeu de quelques dizièmes de mm au niveau de cette plus grande section.

La longueur de chacun des tubes est adaptée au nombre de pièces à distribuer, nombre qui peut être très élevé sans conduire à une quelconque difficulté de transfert ou de distribution.

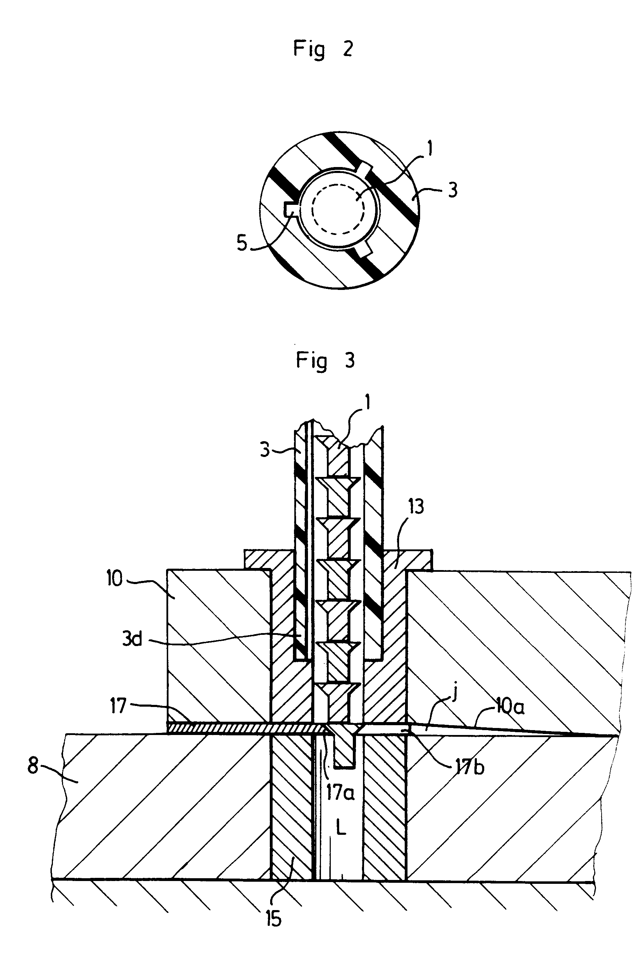

Sur la surface intérieure de chaque tube 3 ou 4 sont ménagées des rainures telles que 5 (figure 2) qui s'étendent sur toute la longueur du tube ; ces rainures s'ouvrent dans l'âme creuse du tube sur toute sa longueur.

A l'entrée de chaque tube 3 ou 4, est fixé un organe d'arrêt des rivets constitué par un embout de raccordement à un conduit d'air comprimé tel que 6. L'autre extrémité du tube dite extrémité de distribution 3d ou 4d est connectée à une tête de transfert 7.

Les tubes 3 et 4 sont préalablement remplis de rivets 1 et 2 des deux types sus-évoqués, de façon que les têtes soient situées vers l'amont par rapport au sens de déplacement. Ces tubes peuvent en particulier être remplis préalablement par le fabricant de rivets afin de servir de conditionnement au cours du transport et du stockage des rivets, la connexion des tubes sur la tête de transfert 7 s'effectuant au moment de l'utilisation. Le cas échéant, les tubes 3 et 4 peuvent également être remplis de rivets sur le lieu d'utilisation.

Les tubes 3 et 4 sont prévus rectilignes, enroulés en spires ou sous forme de galettes.

La tête de transfert 7 comprend des tiroirs mobiles 8 et 9 en nombre égal au nombre de tubes 3, 4, c'est-à-dire au nombre de type de pièces à distribuer (deux en l'exemple).

Ces tiroirs sont disposés entre des platines fixes 10, 11 et 12 qui les guident dans leurs déplacements. Ces platines possèdent des parties décalées les unes par rapport aux autres de façon à permettre de connecter sur chacune d'elles l'extrémité de distribution d'un tube 3 ou 4 comme le représente la figure 1. En l'exemple, cette connexion est réalisée grâce à des douilles 13 et 14 insérées dans des lumières des platines et dans lesquelles les extrémités de distribution des tubes 3 et 4 sont emmanchées.

Les tiroirs possèdent des douilles 15 et 16 qui sont insérées de façon analogue dans des lumières ménagées dans ces tiroirs ; ces douilles 15 et 16 possèdent une âme creuse de diamètre correspondant au diamètre de l'âme creuse des douilles 13, 14 (diamètre égal à celui de l'âme creuse des tubes 3, 4).

Les douilles 15 et 16 des tiroirs forment ainsi des logements -L- (figure 3) appelés à recevoir, une à une, les pièces issues des tubes 3 ou 4. Ces douilles sont positionnées de façon que leur logement -L- vienne s'aligner avec l'âme creuse des douilles 13 ou 14 et des tubes 3 ou 4 lorsque les tiroirs sont au repos (position dite de réception : figures 1 et 3).

De plus, un organe de butée 17 ou 18, constitué par une plaquette, est fixé sur chaque platine 10 ou 11 en regard de l'extrémité de distribution du tube 3 ou 4 correspondant, de façon à retenir la tête du rivet engagé dans le logement -L- du tiroir concerné. En l'exemple, ces plaquettes ont une ouverture de retenue concave dont le bord 17a de forme semi-tronconique est adapté pour retenir le rivet par sa portion tronconique sous tête (figure 3).

Chaque plaquette 17 ou 18 est située à l'opposé des moyens communs de sortie que comporte la tête de transfert (décrits ci-après) de façon que chaque tiroir puisse se déplacer dans la direction de ces moyens de sortie, et que le rivet en appui contre la plaquette soit libéré au début du mouvement. En outre, pour permettre le passage de la tête de rivet lors de ce mouvement, un jeu de dégagement -j- est prévu à l'opposé de chaque plaquette 17 ou 18. Par exemple, ce jeu peut être préservé par un prolongement 17b de la plaquette (de part et d'autre de son ouverture) et par une taille en biseau 10a de la platine au-delà de l'extrémité de plaquette.

Par ailleurs, la tête de transfert comprend des moyens communs C de sortie des pièces qui sont engagées dans les logements -L- des tiroirs. Ces moyens -C- sont constitués par des passages 19-23 qui sont ménagés dans les platines 10, 11, 12 et les tiroirs 8, 9 . Ces passages sont constitués par l'âme creuse de douilles identiques aux douilles 15 ou 16, adaptées pour permettre le passage des rivets. Les passages 19-23 sont agencés de façon à venir dans l'alignement les uns des autres, comme le représente la figure 1, lorsque les tiroirs sont dans leur position de réception.

Les passages 19-23 débouchent, d'un côté de la tête de transfert, dans un conduit 24 d'expulsion des pièces, lequel alimente la machine automatique à riveter. De l'autre côté de la tête, les passages 19-23 sont reliés à un conduit 25 d'arrivée d'air sous pression qui refoule chaque rivet présenté dans les passages de sortie vers le conduit 24.

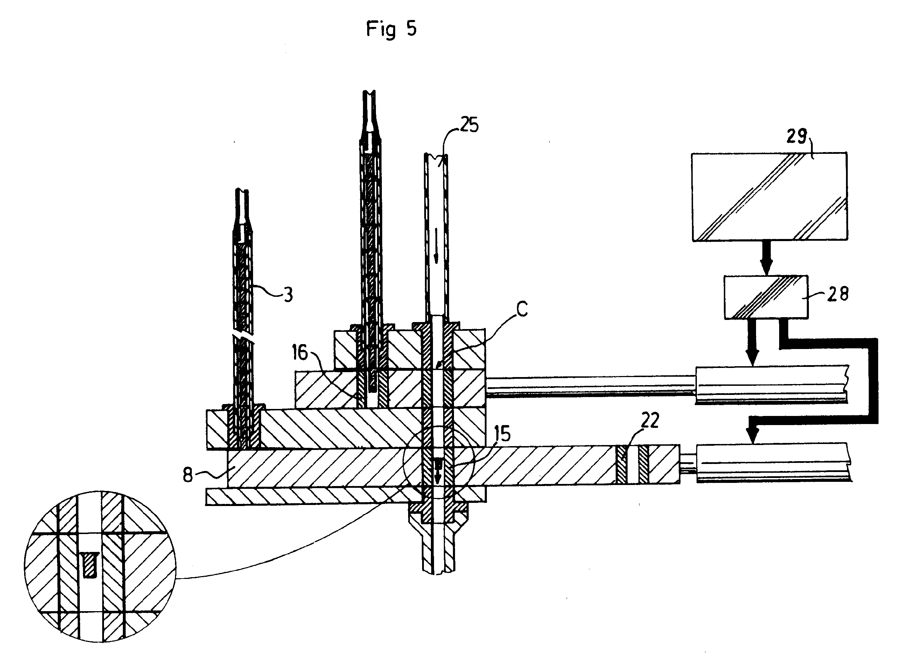

En outre, chaque tiroir 8 ou 9 est attelé à un vérin d'entraînement 26 ou 27 agencé pour mouvoir ledit tiroir entre la position de réception précitée (schématisée aux figures 1 et 3) et une position dite d'expulsion (qui est schématisée à la figure 5) où la douille 15 ou 16 du tiroir est venue dans l'alignement des moyens de sortie C.

Les vérins 26 et 27 sont commandés au travers d'un distributeur pneumatique 28 par un automate classique 29 programmé pour conditionner des séquences de manoeuvre appropriées, fonction de l'application.

Les figures 1 et 3 représentent le dispositif au début d'une séquence. Les tiroirs 8 et 9 sont dans leur position de réception et des rivets, court 1 et long 2, sont engagés dans leurs logements respectifs L.

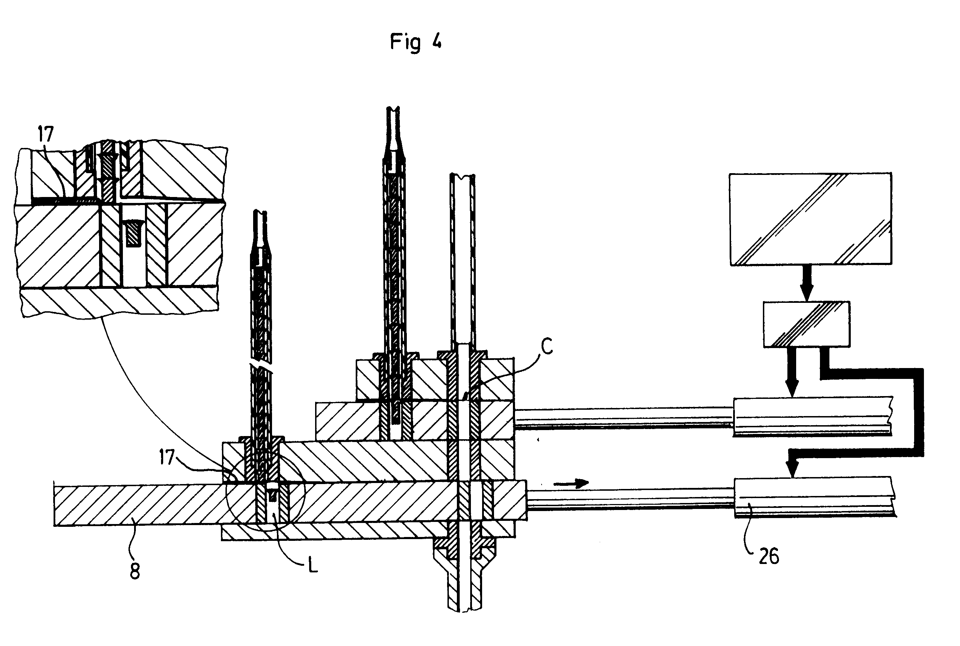

Si l'opération de rivetage requiert un rivet court, sous la commande de l'automate 29 le distributeur pneumatique 28 alimente le vérin 26 dans le sens de sa rétraction. Le tiroir 8 est déplacé dans le sens du rapprochement de son logement L vers les moyens de sortie C (figure 4). Le rivet court est libéré de la plaquette de retenue 17 et est entrainé dans le logement L vers lesdits moyens de sortie C.

Lorsque le logement L du tiroir 8 parvient au niveau des moyens de sortie C (figure 5), le rivet court est expulsé à travers les passages de sortie par l'air sous pression provenant du conduit 25, pour être distribué vers la machine à riveter.

Le tiroir 8 est ensuite déplacé en sens inverse pour replacer son logement L dans l'alignement du tube 3 de rivets. Un nouveau rivet court s'engage dans le logement L du tiroir et une nouvelle séquence peut commencer.

Le dispositif de l'invention peut permettre de sélectionner et distribuer un grand nombre de rivets différents, sans que la cadence de distribution en soit affectée en raison de sa faible inertie (indépendante du nombre de types de rivets à distribuer).

Le conditionnement préalable des rivets dans des tubes distincts assure une garantie que le rivet approprié sera distribué à chaque séquence et réduit les risques de panne ou de rivetage déficient.

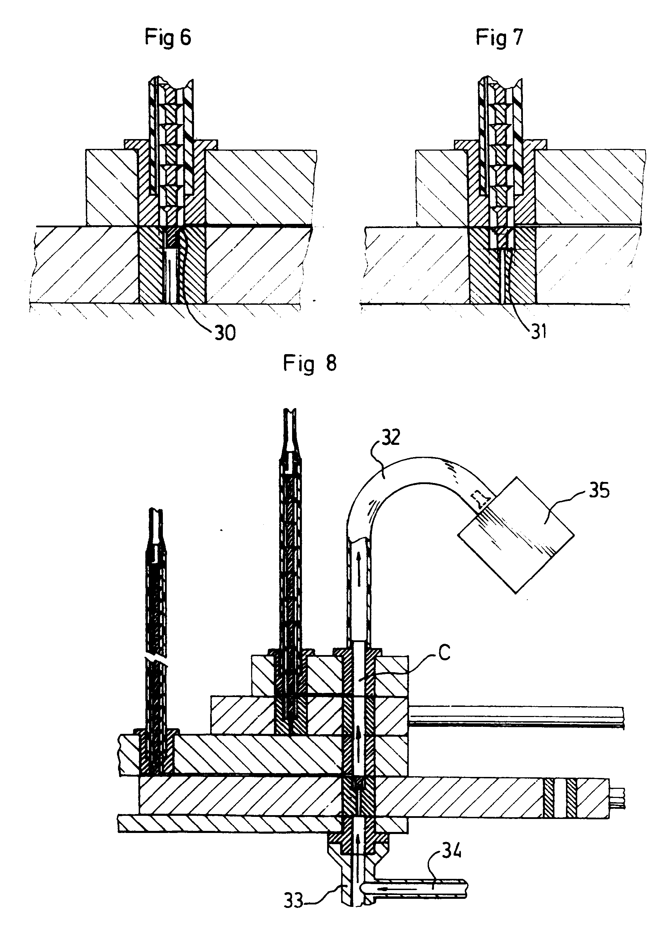

Les figures 6, 7 et 8 visent une variante du dispositif ci-dessus décrit.

Dans cette variante, les moyens de retenue des pièces sont constitués par des moyens d'arrêt prévus sur les douilles des tiroirs. Par exemple, la figure 6 montre un arrêt formé par un chanfrein 30 qui est ménagé à l'extrémité de la douille formant dans chaque tiroir le logement d'une pièce ; ce chanfrein arrête le rivet par appui sous sa tête lorsque celui-ci s'est inséré dans le logement. La figure 7 montre un autre type d'arrêt constitué par un épaulement 31 que forme la douille, en vue d'arrêter le rivet par l'extrémité de sa tige comme le représente cette figure.

Comme le représente la figure 8, dans cette variante, les passages des moyens communs de sortie C débouchent d'un côté de la tête, dans un conduit de stockage provisoire 32 en forme de crosse et, de l'autre côté, dans un conduit d'expulsion 33. En l'exemple des moyens pneumatiques sont prévus pour assurer dans une première phase une expulsion de la pièce vers le conduit 32, grâce à une impulsion pneumatique délivrée par un conduit 34 ; dans une seconde phase, après retour des tiroirs dans leur position de réception, les moyens pneumatiques, symbolisés en 35, assurent un entrainement de la pièce depuis le conduit de stockage 32 vers le conduit d'expulsion 33.

## Revendications

1. Dispositif de sélection et distribution de pièces (1,2), comprenant :
(a) au moins deux conduits (3, 4) d'arrivée de pièces (1,2), chaque conduit relié à une source de fluide comprimé étant constitué par un tube présentant une âme creuse de forme adaptée pour assurer un guidage de pièces d'un type déterminé, et se terminant par une extrémité de distribution desdites pièces (3d, 4d),
(b) une tête de transfert séquentiel (7) à laquelle sont connectées les extrémités de distribution (3d, 4d) des conduits d'arrivée (3,4) en vue du transfert des pièces (1, 2) provenant de ceux-ci, ladite tête de transfert (7) comprenant :
. des platines fixes (10, 11, 12) entre lesquelles sont disposés des tiroirs mobiles (8, 9), chaque tiroir (8,9) étant associé à un conduit (3, 4) et doté d'un logement (L) agencé pour recevoir les pièces (1,2) sortant dudit conduit (3,4),
. des moyens communs (C) de sortie des pièces (1,2), associés à des moyens d'expulsion (25) en particulier pneumatiques,
. des moyens (26, 27) d'entraînement de chaque tiroir (8,9), adaptés pour mouvoir, sur commande, le tiroir considéré (8, 9),
ledit dispositif étant caractérisé en ce que :
- chaque conduit d'arrivée (3,4) comprend au moins une rainure longitudinale (5) ménagée sur sa surface interne de façon à s'ouvrir dans son âme creuse sur la longueur de celle-ci, de sorte que la pression du fluide comprimé s'exerce tout le long de l'âme creuse dudit conduit (3,4), dans les espaces séparant les pièces (1,2), jusqu'à la dernière pièce (1,2) située au niveau de l'extrémité de distribution (3d,4d),
- chaque tiroir (8,9) est mobile entre deux positions, l'une dite position de réception dans laquelle son logement (L) communique avec le conduit d'arrivée (3, 4) correspondant pour recevoir une pièce (1,2), ledit logement (L) étant alors isolé des moyens communs de sortie (C) de façon que la pièce (1,2) demeure prisonnière à l'intérieur dudit logement (L), l'autre dite position d'expulsion dans laquelle ledit logement (L) communique avec les moyens communs de sortie (C) en vue d'assurer l'expulsion de la pièce (1,2) contenue dans celui-ci, le logement (L) étant alors isolé du conduit d'arrivée (3,4) correspondant,
- des moyens de retenue (17, 18) sont associés à chaque conduit d'arrivée (3,4) et au logement correspondant du tiroir (8,9) en vue de retenir la pièce (1,2) engagée dans ledit logement (L) lorsque celui-ci est en position de réception,
- les moyens (26, 27) d'entraînement sont adaptés pour mouvoir chaque tiroir (8, 9) entre la position d'expulsion et la position de réception en vue d'assurer un transfert individuel des pièces (1,2).

2. Dispositif de sélection et distribution de pièces selon la revendication 1, dans lequel les platines fixes (10, 11, 12) de la tête de transfert (7) ont des parties décalées les unes par rapport aux autres de façon à connecter sur chacune d'elles l'extrémité de distribution d'un conduit (3d, 4d).

3. Dispositif de sélection et distribution de pièces selon la revendication 2, dans lequel les moyens communs (C) de sortie des pièces (1,2) comprennent des passages (19, 23) ménagés dans les platines (10,11,12) et les tiroirs (8,9) de façon à venir dans l'alignement lorsque les tiroirs (8,9) sont dans leur position de réception, lesdits passages étant de section adaptée pour permettre le passage des pièces (1,2) et débouchant, d'un côté de la tête (7), dans un conduit d'expulsion des pièces (24), cependant qu'ils sont reliés, de l'autre côté de la tête, à des moyens pneumatiques d'expulsion (25).

4. Dispositif de sélection et distribution de pièces selon l'une des revendications 2 ou 3, caractérisé en ce que les moyens de retenue comprennent des organes de butée (17, 18) assujettis sur les platines (10, 11) de façon à bloquer la pièce (1,2) engagée dans le logement (L) du tiroir (8,9) correspondant lorsque celui-ci est dans sa position de réception, chaque organe de butée étant agencé à l'opposé des moyens communs de sortie (C) en vue de libérer la pièce (1,2) lors du début du mouvement du tiroir (8,9) vers la position d'expulsion.

5. Dispositif selon la revendication 4 pour la sélection et la distribution de rivets (1, 2) présentant une symétrie de révolution autour d'un axe avec une tête de diamètre accrue, caractérisé en ce que l'organe de butée (17,18), agencé en regard de chaque conduit (3,4), est constitué par une plaquette (17, 18) fixée sur la platine correspondante (10, 11) au voisinage de l'extrémité de distribution (3d, 4d) du conduit (3,4), de façon à retenir la tête du rivet (1,2) engagée dans le logement (L) du tiroir (8,9), un jeu de dégagement (j) étant prévu à l'opposé de ladite plaquette (17,18) pour permettre le passage de la tête de rivet (1,2) lors du début du mouvement du tiroir (8,9) vers la position d'expulsion.

6. Dispositif de sélection et distribution de pièces (1,2) selon la revendication 2, caractérisé en ce que :
. les moyens de retenue (17,18) comprennent des moyens d'arrêt (30, 31) disposés dans le logement (L) de chaque tiroir (8,9) de façon à arrêter la pièce (1,2) après son insertion dans ledit logement (L),
. les moyens communs (C) de sortie des pièces (1,2) comprennent des passages ménagés dans les platines (10,11,12) et les tiroirs (8,9) de façon à venir dans l'alignement lorsque les tiroirs (8,9) sont dans leur position de réception, lesdits passages étant de section adaptée pour permettre le passage des pièces (1,2),
. lesdits passages sont agencés pour déboucher, d'un côté de la tête (7), dans un conduit de stockage provisoire de chaque pièce (32) et, de l'autre côté de la tête (7), dans un conduit d'expulsion des pièces (33),
. les moyens pneumatiques d'expulsion (34, 35) sont adaptés pour assurer, dans une première phase, une expulsion de la pièce (1,2) vers le conduit de stockage provisoire (32), puis dans une seconde phase, après retour du tiroir (8,9) dans la position de réception, un entraînement de la pièce (1,2) depuis ledit conduit de stockage provisoire (32) vers le conduit d'expulsion (33).

7. Disposition selon l'une des revendications 1 à 6 pour la sélection et la distribution de pièces (1,2) de -n- types différents, comprenant -n- conduits (3,4) connectés à la tête de transfert (7), laquelle comprend -n-tiroirs mobiles (8,9), chacun affecté à un conduit (3,4).

## Claims

1. Device for the selection and distribution of parts (1, 2), comprising:
(a) at least two conduits (3, 4) for supplying parts (1, 2), each conduit connected to a source of compressed fluid comprising a tube with a hollow core of such shape as to ensure guiding of parts of a definite type and terminating in an end (3d, 4d) for distributing said parts,
(b) a sequential transfer head (7) to which are connected the distribution ends (3d, 4d) of supply conduits (3, 4) with a view to transferring the parts (1, 2) emanating from said conduits, whereby said transfer head (7) comprises:
. fixed plates (10, 11, 12) between which are arranged movable slides (8, 9), each slide (8, 9) being associated with a conduit (3, 4) and endowed with a receptacle (L) arranged to receive parts (1, 2) emanating from said conduit (3, 4),
. common means (C) for discharging parts (1, 2), said means being associated with ejection means (25), in particular of pneumatic type,
. means (26, 27) for driving each slide (8, 9) so designed as to move, on command, the slide (8, 9) in question,
said device being characterised in that:
- each supply conduit (3, 4) comprises at least one longitudinal groove (5) provided on its internal surface so as to open out into its hollow core throughout the length of the latter so that the pressure of the compressed fluid acts along the entire length of the hollow core of said conduit (3, 4) within the spaces separating the parts (1, 2) as far as the last part (1, 2) situated at the level of distribution end (3d, 4d),
- each slide (8, 9) is movable between two positions, a so-called receiving position in which its receptacle (L) communicates with the corresponding supply conduit (3, 4) so as to receive a part (1, 2), said receptacle (L) being isolated in that case from the common discharge means (C) so that the part (1, 2) is held captive within said receptacle (L) and a second position, the so-called ejection position, in which said receptacle (L) communicates with the common discharge means (C) so as to ensure ejection of part (1, 2) contained in said receptacle, receptacle (L) being in that case isolated from the corresponding supply conduit (3, 4),
- retaining means (17, 18) are associated with each supply conduit (3, 4) and with the corresponding receptacle of the slide (8, 9) so as to retain the part (1, 2) held within said receptacle (L) when the latter is in the receiving position,
- driving means (26, 27) are designed to move each slide (8, 9) between the ejection position and the receiving position so as to ensure individual transfer of the parts (1, 2).

2. Device for the selection and distribution of parts according to Claim 1, in which the fixed plates (10, 11, 12) of the transfer head (7) comprise mutually offset sections with a view to connecting to each of said sections the distribution end of a conduit (3d, 4d).

3. Device for the selection and distribution of parts according to Claim 2, in which the common means (C) for discharging parts (1, 2) comprise passages (19, 23) provided within the plates (10, 11, 12) and the slides (8, 9) so that said passages are brought into alignment when the slides (8, 9) are in their receiving position, the cross-section of said passages being so designed as to enable the parts (1, 2) to pass and opening out, on one side of head (7), into a conduit (24) for ejecting parts, whereas on the other side of the head they are connected with pneumatic ejection means (25).

4. Device for the selection and distribution of parts according to one of Claims 2 or 3, characterised in that the retaining means comprise stop elements (17, 18) secured to plates (10, 11) with a view to blocking the part (1, 2) held within the receptacle (L) of the corresponding slide (8, 9) when the latter is in its receiving position, each stop element being arranged opposite the common discharge means (C) so as to release said part (1, 2) as soon as the slide (8, 9) starts to move towards the ejection position.

5. Device according to Claim 4 for the selection and distribution of rivets (1, 2) exhibiting rotational symmetry about a shank and with a head of increased diameter, characterised in that the stop element (17, 18) arranged opposite each conduit (3, 4) comprises a sheet (17, 18) secured to the corresponding plate (10, 11) in the vicinity of the distribution end (3d, 4d) of the conduit (3, 4) so as to retain the head of the rivet (1, 2) held within the receptacle (L) of the slide (8, 9), a disengagement clearance (j) being provided opposite said sheet (17, 18) in order to enable the head of the rivet (1, 2) to pass as soon as the slide (8, 9) starts to move towards the ejection position.

6. Device for the selection and distribution of parts (1, 2) according to Claim 2, characterised in that:
. retaining means (17, 18) comprise arresting means (30, 31) arranged within receptacle (L) of each slide (8, 9) so as to arrest the part (1, 2) after its entry into said receptacle (L),
. common discharge means (C) for parts (1, 2) comprise passages provided within the plates (10, 11, 12) and the slides (8, 9) so that said passages are brought into alignment when the slides (8, 9) are in their receiving position, the cross-section of said passages being so designed as to enable the parts (1, 2) to pass,
. said passages are arranged to open out, on one side of the head (7), into a conduit (32) for provisional storage of each part and, on the other side of the head (7), into a conduit (33) for ejecting the parts.
. pneumatic ejection means (34, 35) are so designed as to ensure, in a first phase, ejection of the part (1, 2) towards the conduit (32) for provisional storage, and then, in a second phase, following the return of the slide (8, 9) to the receiving position, propulsion of the part (1, 2) from said conduit (32) for provisional storage towards the ejection conduit (33).

7. Device according to one of Claims 1 to 6 for the selection and distribution of parts (1, 2) of -n- different types, comprising -n- conduits (3, 4) connected with the transfer head (7), whereby said transfer head comprises -n- movable slides (8, 9), each of which is assigned to a conduit (3, 4).

## Patentansprüche

1. Vorrichtung zur Auswahl und Verteilung von Teilen (1, 2), umfassend:
(a) mindestens zwei Rohrleitungen (3, 4) für die Zufuhr von Teilen (1, 2), wobei jede mit einer Quelle von verdichtetem Fluid in Verbindung stehende Rohrleitung ein Rohr umfaßt, mit einem Hohlkern, dessen Form so beschaffen ist, daß die Führung von Teilen eines bestimmten Typs gewährleistet wird, wobei die besagte Rohrleitung in einem Ende zur Verteilung der besagten Teile (3d, 4d) endet,
(b) einen Kopf (7) für sequentielle Übertragung, mit dem die Verteilenden (3d, 4d) der Zufuhrrohrleitungen (3, 4) verbunden sind, um aus diesen zugeführte Teile (1, 2) zu übertragen, wobei der besagte Übertragungskopf (7) folgende Teile umfaßt:
. feststehende Platten (10, 11, 12), zwischen denen bewegliche Schieber (8, 9) angeordnet sind, wobei jeder Schieber (8, 9) mit einer Rohrleitung (3, 4) in Verbindung steht und mit einer Aufnahme (L) versehen ist, die so beschaffen ist, daß sie die aus der besagten Rohrleitung (3, 4) austretenden Teile (1, 2) aufnimmt,
. gemeinsame Mittel (C) zur Abgabe von Teilen (1, 2), wobei die besagten Mittel mit Ausstoßmitteln (25), insbesondere pneumatischer Art, in Verbindung stehen,
. Mittel (26, 27) zum Antrieb jedes Schiebers (8, 9), die so beschaffen sind, daß sie auf Befehl den betreffenden Schieber (8, 9) verschieben,
wobei die besagte Vorrichtung dadurch gekennzeichnet ist,
- daß jede Zufuhrrohrleitung (3, 4) mindestens eine an ihrer Innenfläche vorgesehene Längsnut (5) umfaßt, die entlang ihrem Hohlkern in den besagten Hohlkern mündet, so daß der Druck des verdichteten Fluids entlang dem gesamten Hohlkern der besagten Rohrleitung (3, 4) in den Zwischenräumen zwischen den Teilen (1, 2) und bis zu dem letzten, in Höhe des Verteilendes (3d, 4d) befindlichen Teil (1, 2) zur Wirkung gelangt,
- daß jeder Schieber (8, 9) zwischen zwei Lagen verschiebbar ist, und zwar einer sogenannten Empfangslage, in der seine Aufnahme (L) mit der entsprechenden Aufnahmerohrleitung (3, 4) für den Empfang eines Teiles (1, 2) in Verbindung steht, wobei die besagte Aufnahme (L) in diesem Falle von den gemeinsamen Abgabemitteln (C) so getrennt ist, daß das Teil (1, 2) im Inneren der besagten Aufnahme (L) festgehalten wird, und einer zweiten Lage, der sogenannten Ausstoßlage, in der die besagte Aufnahme (L) mit den gemeinsamen Abgabemitteln (C) in Verbindung steht, um Ausstoß des darin enthaltenen Teiles (1, 2) zu gewährleisten, während die Aufnahme (L) in diesem Falle von der entsprechenden Zufuhrrohrleitung (3, 4) getrennt ist,
- daß Haltemittel (17, 18) mit jeder Zufuhrrohrleitung (3, 4) und mit der entsprechenden Aufnahme des Schiebers (8, 9) in Verbindung stehen, um das in der besagten Aufnahme (L) befindliche Teil (1, 2) festzuhalten, wenn sich die besagte Aufnahme in der Empfangslage befindet,
- daß die Antriebsmittel (26, 27) so beschaffen sind, daß sie jeden Schieber (8, 9) zwischen der Ausstoßlage und der Empfangslage verschieben, um individuelle Übertragung der Teile (1, 2) zu gewährleisten.

2. Vorrichtung zur Auswahl und Verteilung von Teilen nach Anspruch 1, bei der die feststehenden Platten (10, 11, 12) des Übertragungskopfes (7) im Verhältnis zueinander versetzte Bereiche aufweisen, wobei an jeden dieser Bereiche das Verteilende einer Rohrleitung (3d, 4d) angeschlossen wird.

3. Vorrichtung zur Auswahl und Verteilung von Teilen nach Anspruch 2, bei der die gemeinsamen Mittel (C) zur Abgabe der Teile (1, 2) in den Platten (10, 11, 12) und den Schiebern (8, 9) vorgesehene Kanäle (19, 23) umfassen, wobei diese miteinander fluchten, wenn die Schieber (8, 9) in ihrer Empfangslage sind, und zwar ist der Querschnitt der besagten Kanäle so beschaffen, daß er den Durchgang der Teile (1, 2) gestattet und die besagten Kanäle an einer Seite des Kopfes (7) in eine Rohrleitung (24) zum Ausstoßen der Teile münden, während sie an der anderen Seite des Kopfes mit pneumatischen Ausstoßmitteln (25) in Verbindung stehen.

4. Vorrichtung zur Auswahl und Verteilung von Teilen nach einem der Ansprüche 2 oder 3, dadurch gekennzeichnet, daß die Haltemittel Anschlagelemente (17, 18) umfassen, die an den Platten (10, 11) angebracht sind, so daß sie das in der Aufnahme (L) des entsprechenden Schiebers (8, 9) sitzende Teil (1,2) blockieren, wenn sich der besagte Schieber in seiner Empfangslage befindet, und zwar ist jedes Anschlagelement gegenüber den gemeinsamen Abgabemitteln (C) angeordnet, so daß es das Teil (1, 2) zu Beginn der Bewegung des Schiebers (8, 9) in die Ausstoßlage freigibt.

5. Vorrichtung nach Anspruch 4 zur Auswahl und Verteilung von Nieten (1, 2) mit Rotationssymmetrie um einen Schaft mit einem Kopf vergrößerten Durchmessers, dadurch gekennzeichnet, daß das gegenüber jeder Rohrleitung (3, 4) angeordnete Anschlagelement (17, 18) ein Plättchen (17, 18) umfaßt, das an der entsprechenden Platte (10, 11) in Nähe des Verteilendes (3d, 4d) der Rohrleitung (3, 4) angebracht ist, um den Kopf des in der Aufnahme (L) des Schiebers (8, 9) sitzenden Nietes (1, 2) festzuhalten, wobei gegenüber dem besagten Plättchen (17, 18) ein Ausrückspiel (j) vorgesehen ist, um zu Beginn der Bewegung des Schiebers (8, 9) in die Ausstoßlage Durchgang des Kopfes von Niet (1, 2) zu gestatten.

6. Vorrichtung zur Auswahl und Verteilung von Teilen (1, 2) nach Anspruch 2, dadurch gekennzeichnet,
. daß die Haltemittel (17, 18) in der Aufnahme (L) jedes Schiebers (8, 9) angeordnete Arretiermittel (30, 31) umfassen, so daß das Teil (1, 2) nach seiner Einführung in die Aufnahme (L) arretiert wird,
. daß die gemeinsamen Mittel (C) zur Abgabe von Teilen (1, 2) in den Platten (10, 11, 12) und den Schiebern (8, 9) vorgesehene Kanäle umfassen, die miteinander fluchten, wenn die Schieber (8, 9) in ihrer Empfangslage sind, und zwar haben die besagten Kanäle einen Querschnitt, der so beschaffen ist, daß er Durchgang der Teile (1, 2) gestattet,
. daß die besagten Kanäle so angeordnet sind, daß sie an einer Seite von Kopf (7) in eine Rohrleitung (32) für vorübergehende Speicherung jedes Teils und an der anderen Seite von Kopf (7) in eine Rohrleitung (33) zum Ausstoßen der Teile münden,
. daß die pneumatischen Ausstoßmittel (34, 35) so beschaffen sind, daß sie in einer ersten Phase Ausstoß des Teiles (1, 2) in die Rohrleitung (32) für vorübergehende Speicherung gewährleisten, und dann in einer zweiten Phase, nach Rückkehr des Schiebers (8, 9) in die Empfangslage, Vortrieb des Teiles (1, 2) aus der besagten Rohrleitung (32) für vorübergehende Speicherung in die Ausstoßrohrleitung (33).

7. Vorrichtung nach einem der Ansprüche 1 bis 6 zur Auswahl und Verteilung von Teilen (1, 2) von -n- verschiedenen Typen, wobei die besagte Vorrichtung -n- an den Übertragungskopf (7) angeschlossene Rohrleitungen (3, 4) umfaßt, und der besagte Übertragungskopf -n- bewegliche Schieber (8, 9) umfaßt, von denen jeder einer Rohrleitung (3, 4) zugeteilt ist.
